(19) Europäisches Patentamt / European Patent Office / Office européen des brevets

(11) **EP 3 032 730 B1**

(12) **EUROPEAN PATENT SPECIFICATION**

(45) Date of publication and mention
of the grant of the patent:
**20.01.2021 Bulletin 2021/03**

(51) Int Cl.:
**H02M 3/07** *(2006.01)*    *H02M 1/00* *(2006.01)*

(21) Application number: **15198594.2**

(22) Date of filing: **09.12.2015**

(54) **VOLTAGE GENERATOR WHICH CAN SUPPORT ASSOCIATED CIRCUITRY**

SPANNUNGSGENERATOR, DER EINE VERBUNDENE SCHALTUNGSBAUGRUPPE UNTERSTÜTZEN KANN

GÉNÉRATEUR DE TENSION QUI PEUT SUPPORTER DES CIRCUITS ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2014  US 201462089907 P**
**19.10.2015  US 201514886343**

(43) Date of publication of application:
**15.06.2016  Bulletin 2016/24**

(73) Proprietor: **RichWave Technology Corp.**
**Taipei City 114 (TW)**

(72) Inventors:
• **Chen, Chih-Sheng**
**114 Taipei City (TW)**
• **Peng, Tien-Yun**
**114 Taipei City (TW)**

(74) Representative: **Straus, Alexander et al**
**2K Patent- und Rechtsanwälte - München**
**Keltenring 9**
**82041 Oberhaching (DE)**

(56) References cited:
**US-A1- 2010 246 859    US-A1- 2012 049 938**
**US-A1- 2013 187 698    US-A1- 2014 210 436**
**US-A1- 2014 354 340    US-B1- 7 254 157**

## Description

Field of the Invention

The present disclosure relates to a voltage generator, and more specifically, to a fast-charging voltage generator that may be employed to support associated circuitry.

Background of the Invention

Radio frequency (RF) switches are important building blocks in many wired and wireless communication systems. Solid state RF switches are found in many different communication devices such as cellular telephones, wireless pagers, wireless infrastructure equipment, satellite communications equipment, and cable television equipment. As is well known, the performance of a solid state RF switch may be characterized by one of any number of operating performance parameters including insertion loss and switch isolation. Performance parameters are often tightly coupled, and any one parameter can be emphasized in the design of RF switch components at the expense of others. Other characteristics that are important in RF switch design include ease and degree (or level) of integration of the RF switch, complexity, yield, return loss and, of course, cost of manufacture.

Still other performance characteristics associated with RF switches are power handling capability and switching speed. When the power handling capability of an RF switch is low, the RF switch might not be able to isolate one path from another if the input signal is too great. That is, the peak-to-peak voltage swing of an input signal might be sufficiently high to overcome the reverse bias of a given transistor or transistor group, thus effectively causing such a transistor or transistor group that has been placed in an OFF state (reverse bias state) to be in an undesirable ON state, and effectively ruin the switching capability of the RF switch. Switching speed is closely related to power handling in that if the speed of switching is not fast enough, a given switch path might not be isolated quickly enough and thus portions of received or transmitted signals might undesirably be present on unselected branches of the switch.

US 2014/0210436 A1 discloses a radio frequency switching circuitry. The radio frequency switching circuitry includes support circuitry for maintaining one or more RF switching elements in either an ON or OFF state. The support circuitry includes a negative charge pump adapted to quickly generate a negative voltage during a "boost" mode of operation, and maintain the negative voltage during a normal mode of operation.

The negative charge pump includes an oscillator adapted to generate a high frequency oscillating signal for driving the charge pump during the boost mode of operation and a low frequency oscillating signal for driving the charge pump during the normal mode of operation. By generating the high frequency oscillating signal only during a boost mode of operation, spurious noise coupled to the RG switch circuitry is minimized during a normal mode of operation.

US 2014/354340 A1 discloses a circuit employed in an energy management core of a switch device, where the circuit comprises a frequency generator comprising a counter and a multi-frequency ring oscillator, and a charge pump, the output of which supplies radio frequency switches via a filter capacitor. A first frequency generated by the frequency generator allows the charge-pump to settle in a reduced period of time and while the one or other frequencies generated may be selected to reduce power consumption and/or spurious emission of the circuit.

US 2012/049938 A1 discloses a radio frequency switching circuit. The radio frequency switching circuit includes an RF switch section, a voltage regulator to supply the driver section of the switch section, a filter circuit connected between the output of the voltage regulator and the input of the driver section and a bypass to the filter circuit. The voltage regulator comprises a ring oscillator and a charge pump. The bypass is activated by a signal Vmodel when switching of the switch section occurs.

Summary of the Invention:

The present invention aims at providing a fast-charging voltage generator that can be employed to support associated circuitry.

This is achieved by a voltage generator according to the claims here below. The dependent claims pertain to corresponding further developments and improvements.

As will be seen more clearly from the detailed description following below, the claimed voltage generator includes an oscillator, a charge pump, a smoothing capacitor, a resistor, and a shorting element. The charge pump has an input and an output, and the input of the charge pump is coupled to an output of the oscillator. The resistor has an input end and an output end, the input end is coupled to the output of the charge pump, and the output end is coupled to the smoothing capacitor. The shorting element is connected in parallel with the resistor and which, when turned on, causes the resistor to be at least partially bypassed.

The voltage generator is for supplying voltage to a radio frequency (RF) switch via the smoothing capacitor, and a frequency of the oscillator is increased during a switching period of the RF switch.

Another claimed voltage generator includes an oscillator, a charge pump, and a smoothing capacitor. The charge pump has an input and an output, the input of the charge pump is coupled to the output of the oscillator. The smoothing capacitor is coupled to the output of the charge pump.

The voltage generator is for supplying a voltage to a circuit via the smoothing capacitor. The oscillator operates at a first frequency during a transition period of the circuit and operates at a second frequency lower than the first frequency during a non-transition period of the circuit.

Brief Description of the Drawings

The present disclosure will become more readily apparent to those ordinarily skilled in the art after reviewing the following detailed description and accompanying drawings, in which:

FIG. 1 depicts a block diagram of a voltage generator in accordance with a first embodiment of the present disclosure;

FIG. 2 depicts a block diagram of a voltage generator in accordance with a second embodiment of the present disclosure;

FIG. 3 depicts more details of several components shown in FIGs. 1 and 2 in accordance with an embodiment of the present disclosure;

FIG. 4 is a schematic diagram of another embodiment of a regulated voltage generator of a ring oscillator in accordance with an embodiment of the present disclosure;

FIG. 5 is a schematic diagram of an inverter module of a ring oscillator in accordance with an embodiment of the present disclosure;

FIG. 6 is a schematic diagram including a switchable shorting element in accordance with an embodiment of the present disclosure;

FIG. 7 is a schematic diagram including a switchable shorting element in accordance with another embodiment of the present disclosure;

FIG. 8 is a schematic diagram including a switchable shorting element in accordance with another embodiment of the present disclosure;

FIG. 9 depicts the relation between Vout and time in the case that the enable signal is kept high;

FIG. 10 depicts the relation between Vout and time in the case that the enable signal is not applied at all;

FIG. 11 depicts the relation between enable signal and time in accordance with embodiments of the present disclosure;

FIG. 12 depicts the relation between Vout and time in the case that the enable signal in FIG. 11 is applied;

FIG. 13 shows pre-charging and normal operation states corresponding to fast and slow voltage charging periods in accordance with an embodiment of the present disclosure;

FIG. 14 shows pre-charging and normal operation states corresponding to fast and slow voltage charging periods in accordance with another embodiment of the present disclosure;

FIG. 15 depicts control logic that is employed to operate an RF switch like that shown in shown in FIG. 16 in accordance with an embodiment of the present disclosure;

FIG. 16 depicts a radio frequency (RF) switch that can be controlled to operate in accordance with the fast and slow charging periods in accordance with an embodiment of the present disclosure;

FIG. 17 depicts components of a voltage generator, with an emphasis on the application of the enable signal on a regulated voltage generator and the switchable shorting element in accordance with an embodiment of the present disclosure;

FIG. 18 shows output voltage of the voltage generator in FIG. 1 or 2 in accordance with an embodiment of the present disclosure;

FIG. 19 shows output voltage of the voltage generator in FIG. 1 or 2 in accordance with another embodiment of the present disclosure;

FIG. 20 shows output voltage of the voltage generator in FIG. 1 or 2 in accordance with another embodiment of the present disclosure;

FIG. 21 shows output voltage of the voltage generator in FIG. 1 or 2 in accordance with another embodiment of the present disclosure;

FIG. 22 shows output voltage of the voltage generator in FIG. 1 or 2 in accordance with another embodiment of the present disclosure; and

FIG. 23 shows output voltage of the voltage generator in FIG. 1 or 2 in accordance with another embodiment of the present disclosure.

Detailed Description

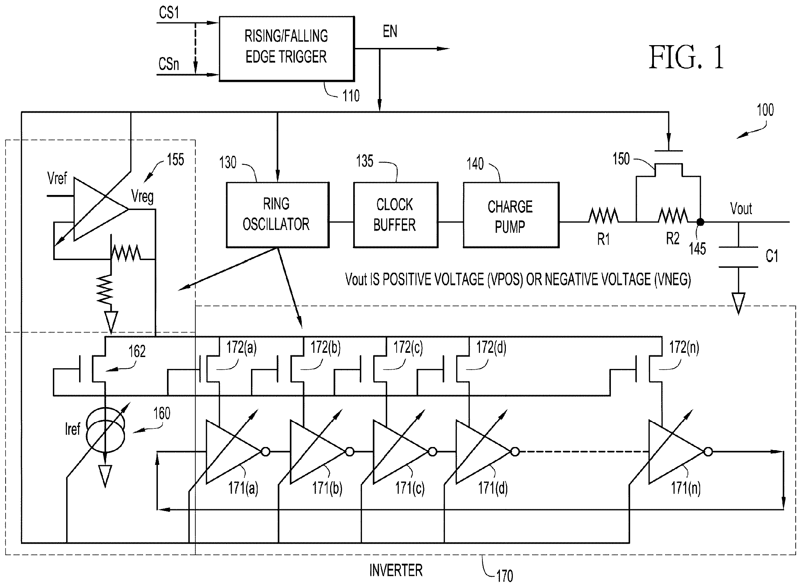

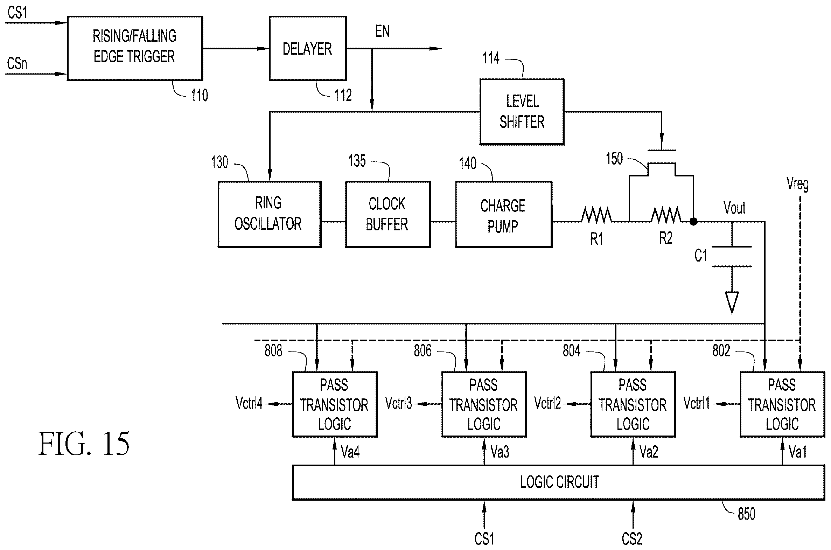

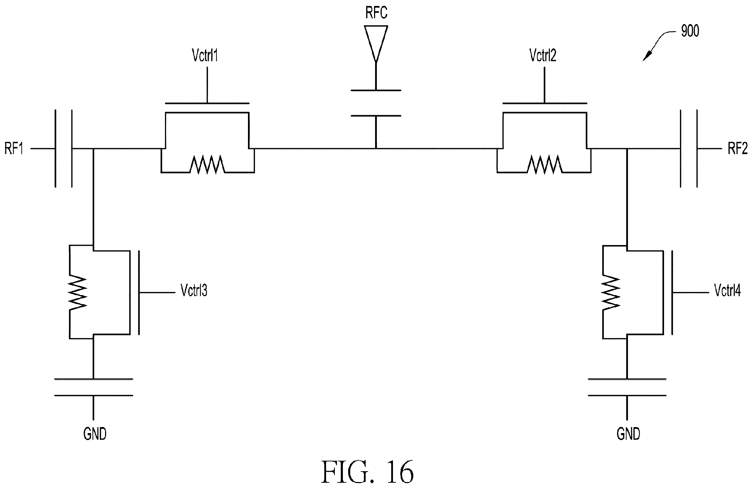

FIG. 1 depicts a block diagram of a voltage generator 100 in accordance with a first embodiment of the present disclosure. As shown, voltage generator 100 includes a rising/falling edge trigger 110 that is responsive to control signals CS1 ...CSn, and that generates an enable signal EN according to a rising or falling edge of the control signals CS1..CSn. As will be explained below with respect to FIGs. 15 and 16, control signals CS1...CSn may be used as control signals to enable or disable respective branches of a radio frequency (RF) switch. As those skilled in the art will come to appreciate, the embodiments described herein improve the switching performance of such an RF switch.

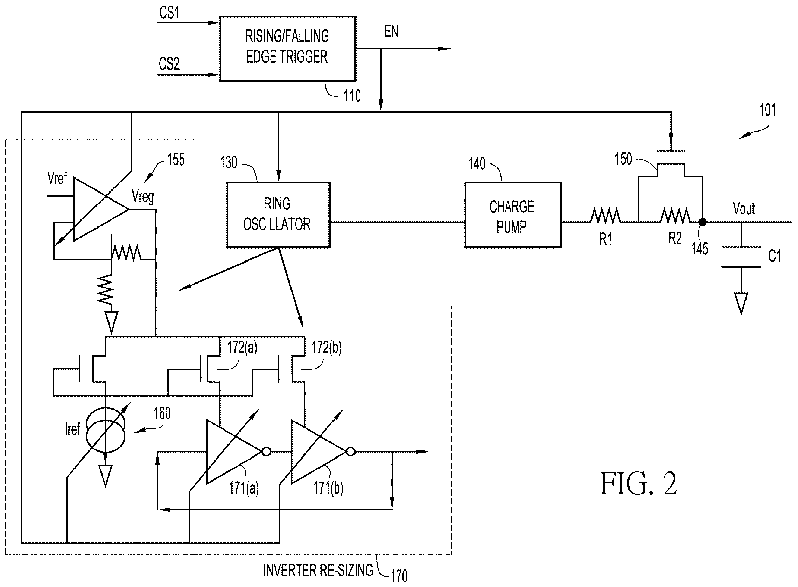

As further shown in FIG. 1, voltage generator 100 includes an oscillator 130 such as a ring oscillator, a clock buffer 135, a charge pump 140, a switchable shorting element (e.g., a transistor) 150, a first resistor R1 (i.e., an additional resistor) and a second resistor R2 (i.e., a resistor) connected in series and connected between an output of the charge pump 140 and a smoothing capacitor C1. The node 145 connecting the first end of second resistor R2 and one side of smoothing capacitor C1 is designated as Vout and is the output that supplies a desired voltage to gates of respective transistors that control whether a given path of an RF switch is enabled or disabled (as will be described more fully with respect to FIGs. 15 and 16). Vout could be a positive voltage (VPOS) or a negative voltage (VNEG). In alternative embodiments, clock buffer 135 could be replaced by a rail-to-rail amplifier, or be eliminated (shown in FIG. 2). Switchable shorting element 150 is connected in parallel with second resistor R2 and which, when turned on, causes second resistor R2 to be bypassed or shorted, thereby reducing the RC constant made up of first and second resistors R1, R2 and smoothing capacitor C1. Further operational details of switchable shorting element 150 are described later herein.

Ring oscillator 130 comprises a regulated voltage generator 155 that generates regulated voltage Vreg, a bias current generator 160 that generates a bias current Iref, and an inverter module 170 made up of a plurality of inverter devices 171(a)-171(n).

Each of the inverter devices 171(a)-171(n) is powered by a respective transistor 172(1)-172(n) with regulated voltage generator 155 and bias current generator 160 providing the desired voltage and current thereto. Gate voltage for transistors 172(1)-172(n) is generated by Iref and transistor 162, which is operated in its saturation region. Thus, the gate voltage equals Vreg - VGS (for transistor 162).

As further shown, enable signal EN is supplied to switchable shorting element 150 and to oscillator 130, and thus also to regulated voltage generator 155, bias current generator 160 and inverter module 170. The result of the application of the enable signal will be described in further detail below. In one embodiment, rising falling edge trigger 110 generates enable signal EN for a predetermined period of time, e.g., approximately 2 μsec, by use of, e.g. a delayer circuit (shown in FIG. 15). That is, enable signal EN may be considered a momentary signal for purposes of assisting an RF switch to change from a startup mode to a normal operational mode, or to change from one mode to another mode during normal operations.

FIG. 2 depicts a block diagram of a voltage generator 101 in accordance with a second embodiment of the present disclosure. As shown, voltage generator 101 includes rising/falling edge trigger 110 that is responsive to control signals CS1 and CS2, and that generates enable signal EN according to a rising or falling edge of the control signals CS1, CS2. In this embodiment, the input of charge pump 140 is coupled to the output of the oscillator 130 (i.e., without intervening clock buffer 135 as shown in FIG. 1). Other than the removal of clock buffer 135, the main difference between voltage generator 100 in FIG. 1 and voltage generator 101 in FIG. 2 is that inverter module 170 comprises at least two inverter devices 171(a) and 171(b). As will be explained below, enable signal EN controls the sizing of inverter module 170, i.e., enable signal EN is employed to select transistors with different gate sizes, thereby influencing the frequency of oscillator 130.

A goal of embodiments of the present disclosure is to quickly charge smoothing capacitor C1 to a desired voltage, which may then be available for use to, e.g.,

forward or reverse bias a switching element in another component of an overall circuit (e.g., as shown in FIG. 16). That is, it may be desirable to have a higher (or lower)-than-nominal voltage available for a variety of purposes, and sometimes it is particularly helpful to be able to generate such a voltage very quickly.

More specifically, in accordance with embodiments of the present disclosure, voltage generator 101 (as an example) operates in two states. In a first, fast or pre-charging, state, the voltage generator operates to quickly charge smoothing capacitor C1 to an intermediate voltage that is sufficiently high or low for selected applications, and in a second, slow charging, state, the voltage generator operates to reduce noise and to further charge the smoothing capacitor to a lower negative voltage when Vout is a negative voltage (VNEG), or to a higher positive voltage when Vout is a positive voltage (VPOS).

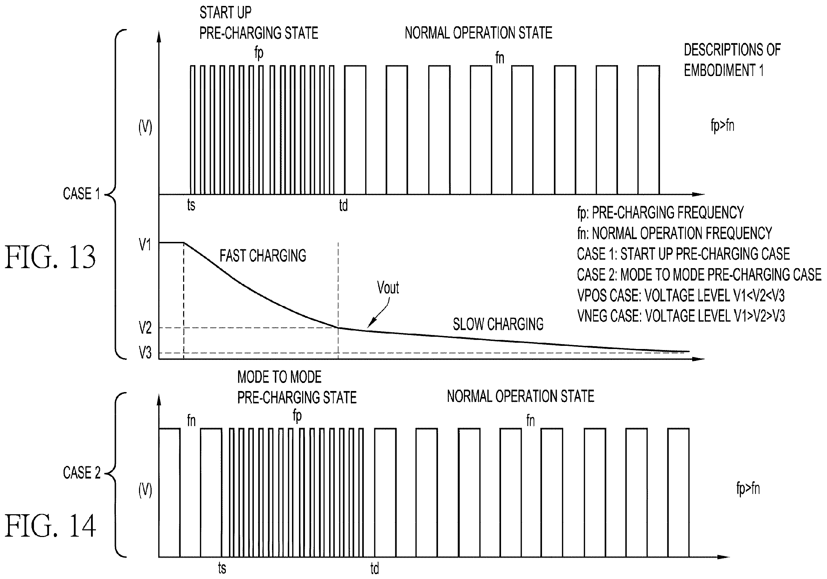

In one embodiment, as shown in FIGs. 13 and 14, in the first, fast charging, state, smoothing capacitor C1 is charged to V2 (e.g., 0.9*V3) from V1 in 2 microseconds (the period of enable signal EN), and in the second, slow charging, state, smoothing capacitor C1 is charged further to V3. To achieve the different states, the enable signal EN is selectively generated/applied when the first, fast charging, state is desired. That state, as mentioned, may last on the order of 2 microseconds. The default state, may be considered the second, slow charging, state.

The generated enable signal EN may be applied to one or more of several components that enable voltage generator 101 (or 100) to generate the desired voltage within the desired timeframe.

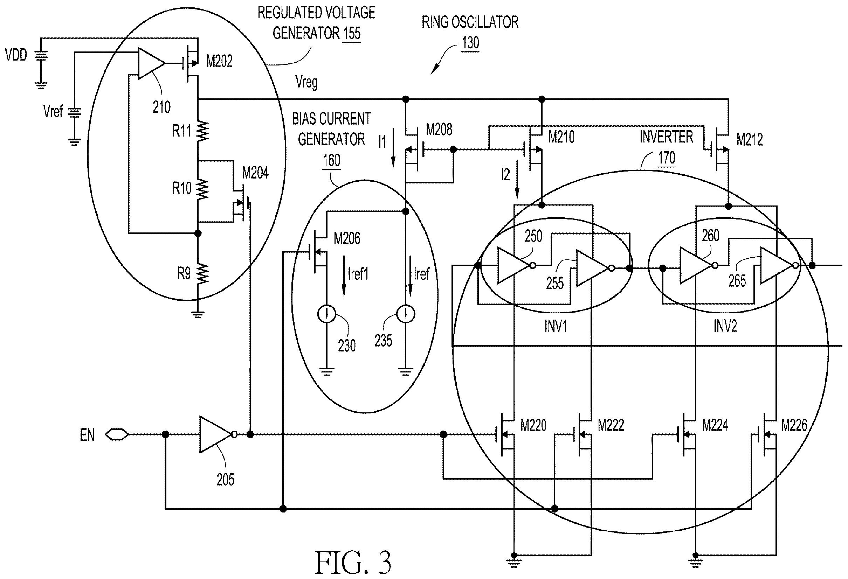

FIG. 3 depicts more details of the several components shown in FIG. 2 in accordance with some embodiments of the present disclosure. Those skilled in the art will appreciate that the details shown in FIG. 3 are exemplary only. Other implementations are possible as those skilled in the art will appreciate.

In FIG. 3, regulated voltage generator 155 comprises series connected resistors R9, R10 and R11 that provide a path to ground for VDD via transistor M202. A reference voltage Vref is used as one input to an opamp 210 whose other input is supplied from the node between resistors R9 and R10. Transistor M204 controls whether resistor R10 is bypassed or not. That is, upon the application of enable signal EN via inverter 205, resistor R10 is placed back in series with R9 and R11 thereby increasing the voltage of Vreg.

As mentioned, embodiments of the present invention provide a fast charging state and a slow charging state. In the fast charging state (or pre-charging state): EN'(invert of EN) = Low

$$Vreg = Vref \times [1+ (R11 + R10)/R9]$$

In the slow charging state (or the normal operation state): EN'(invert of EN) = High

$$Vreg = Vref \times [1 + (R11/R9)]$$

Vreg (Pre-charging state, Vreg1) > Vreg(Normal operation state, Vreg2)

A higher Vreg results in a higher frequency for oscillator 130.

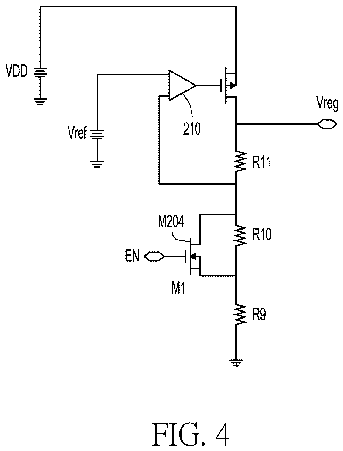

FIG. 4 depicts another possible embodiment for regulated voltage generator 155. In this case, a non-inverted version of enable signal EN is employed, and an input to op-amp 210 is from a node between R10 and R11.

Thus, in the embodiment of FIG. 4, in the fast charging state/Pre-charging state:
EN = High

$$Vreg = Vref \times [1 + [R11/R9]$$

In the slow charging/normal operation state: (or the normal operation state) EN = Low

$$Vreg = Vref \times [1 + (R11/(R9 + R10))]$$

Thus, and referring again to FIG. 3, when the enable signal EN is high, inverter 205 inverts the high enable signal EN and turns off M204. This, in turn, places resistor R10 in the circuit resulting in an increased Vreg regulated voltage. This regulated voltage is supplied to the bias current generator 160 and to the several inverter devices 171(1), etc. of ring oscillator 130. By increasing the regulated voltage, the frequency of ring oscillator 130 increases, thereby more quickly achieving the fast charge over the course of, e.g., the predetermined 2 microsecond fast charging period.

Still referring to FIG. 3, bias current generator 160 is comprised of transistor M206 and current sources 230 and 235. Voltage Vreg is supplied through transistor M208. Enable signal EN is used to control transistor M206.

In this configuration of bias current generator 160, in the fast charging state/Pre-charging state:

EN = High, M206 is turn ON
I1 = Iref + Iref1, I2 (to inverter) = I1

In the slow charging state/Normal operation state:

EN = Low, M206 is turned Off
I1 = Iref, I2 (to inverter) = I1

Thus, as shown, in the first state, the high enable signal EN is supplied to transistor M206, which adds an additional bias current designated as Iref1 to the circuit. The higher bias current resulting from the application of the high enable signal EN causes an increase of the frequency of ring oscillator 130, which results in the desired fast charging state.

Referring back to FIG. 2 and still to FIG. 3, inverter module 170 comprises, in this example embodiment, inverter devices INV1 and INV2. Inverter device INV1 comprises inverters 250, 255, transistor M210 via which Vreg is supplied, and transistors M220 and M222. Inverter device INV2 comprises inverters 260, 265, transistor M212 via which Vreg is supplied, and transistors M224 and M226.

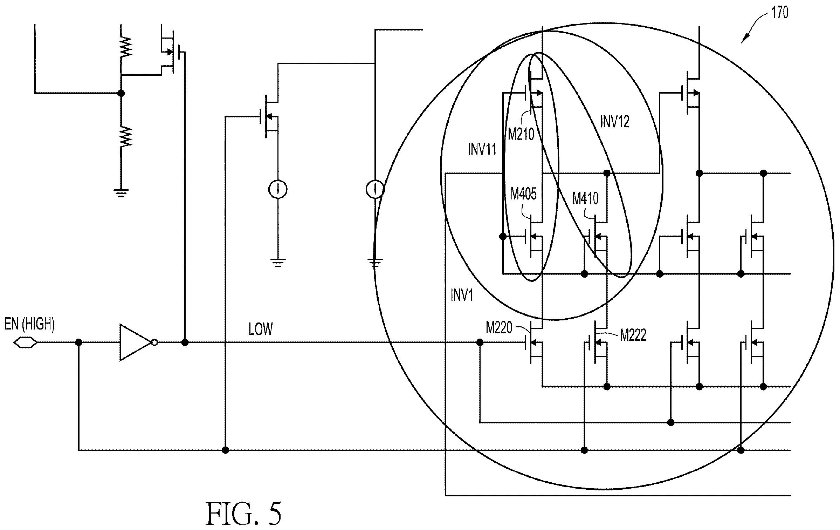

FIG. 5 is a more detailed depiction of inverter module 170 and further shows how INV1, for example, is comprised of INV11 comprising transistor M405 and INV12 comprising transistor M410. As shown, enable signal EN is supplied to transistor M222 and an inverted form of enable signal EN is supplied to transistor M220. In the first state, enable signal EN is high. Thus, transistor M222 is turned on and transistor M220 is turned off so that transistor M410 is active and transistor M405 is inactive. In this configuration, a first-second inverter INV12, formed by at least one PMOS transistor M210 and at least one NMOS transistor M410, is enabled for oscillator 130 operation. In one embodiment, the effective gate length L of the first inverter device INV1 is resized to 0.18μm, i.e., the gate length of M410.

In the second state, i.e., the slow charging state, the enable signal EN is low. Thus, transistor M222 is turned off and transistor M220 is turned on so that transistor M410 is inactive and transistor M405 is active. In this configuration, a first-first inverter INV11, formed by at least one PMOS transistor M210 and at least one NMOS transistor M405, is enabled for oscillator 130 operation. In one embodiment, the effective gate length L of the first inverter device INV1 is resized to 5μm, i.e., the gate length of M405. With a smaller gate length, the frequency of the ring oscillator 130 is increased thereby achieving the desired fast charging when the enable signal EN is high. In another embodiment, NMOS transistor M405 could be designed with a smaller gate width and NMOS transistor M410 could be designed with larger gate width.

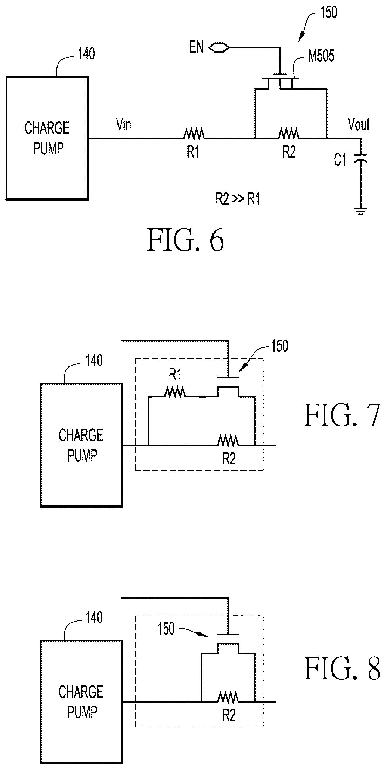

Reference is now made to FIG. 6, which is a schematic of switchable shorting element 150 used in voltage generator 100 or 101 in accordance with an embodiment of the present disclosure. As shown, switchable shorting element 150 comprises transistor M505. In FIG. 6, the additional resistor R1 is coupled between the first end of resistor R2 and the output of charge pump 140, and the second end of the resistor R2 is coupled to the smoothing capacitor C1. Therefore, when a high enable signal EN is applied to transistor M505, transistor M505 is turned on, thus shorting the second resistor R2. In the second, slow charging, state, transistor M505 is turned off thus forcing resistor R2 back into the circuit, and increasing the RC constant in connection with the smoothing capacitor C1. In some embodiments of the present invention, the additional resistor R1 may be coupled between the second end of resistor R2 and smoothing capacitor C1, and the switchable shorting element 150 can still make the resistor R2 shorted from or back into the circuit according to enable signal EN. Also, in the aforesaid embodiments, elements being coupled together can also refer to elements being connected together directly.

Thus, in the fast charging state/Pre-charging state:

$$Vout = Vin \times ( 1 - e^{-t/R1C})$$

In the slow charging state/Normal operation state :

$$Vout = Vin \times [ 1 - e^{-t/(R1+R2)C}]$$

FIG. 7 shows a different configuration of switchable shorting element 150. In FIG. 7, the first end of resistor R2 is coupled to output of charge pump 140, the second end of resistor R2 is coupled to smoothing capacitor C1, and additional resistor R1 is coupled between the first end of resistor R2 and switchable shorting element 150. In some embodiments of the present invention, additional resistor R1 may be coupled between the second end of resistor R2 and switchable shorting element 150. The configuration of FIG. 8 is similar to that shown in FIG. 6, but additional resistor R1 is eliminated.

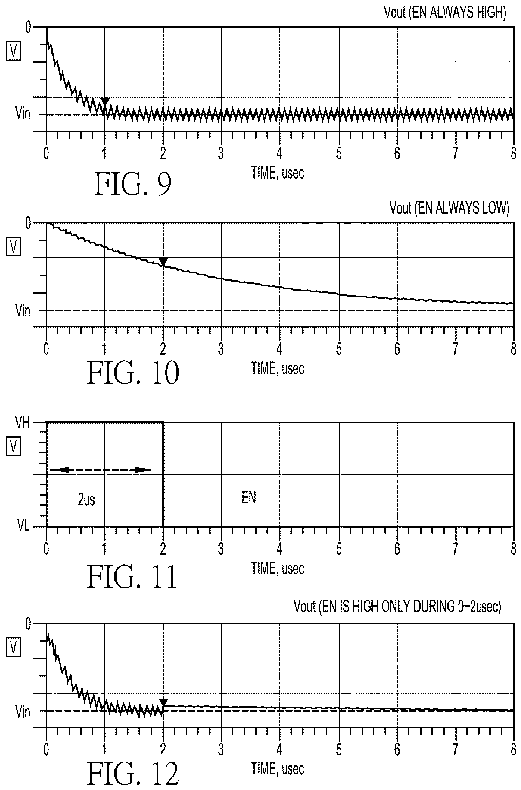

FIG. 9 and 10 depict, respectively, graphs of Vout if enable signal EN is kept high indefinitely, or is never applied at all.

FIG. 11 shows the application of enable signal EN for approximately 2μsec, and FIG. 12 shows that the desired Vout is quickly obtained, and becomes stable almost immediately compared to the graph of FIG. 10.

FIG. 13 shows the variation of Vout with time in the fast, pre-charging (first state) and normal operation (second state) states corresponding to fast and slow voltage charging periods in accordance with an embodiment of the present disclosure.

The graph of FIG. 13 depicts the variation of Vout with time when, e.g., an electronic device is first powered on and an RF switch, for example, will be used for the first time. Such an instance may be considered a start-up or pre-charging state. The graph of FIG. 14 depicts the variation of Vout with time when, after the electronic device is in operation, there is a need to change which path of an RF switch is enabled.

In FIGs. 13 and 14 "fp" connotes the pre-charging or mode-to-mode frequency of oscillator 130, and "fn" connotes the normal frequency, where fp > fn. The indicated ts and td markings denote the beginning and end times of enable signal EN.

FIG. 15 depicts control logic that is employed to operate an RF switch like that shown in shown in FIG. 16. FIG. 15 depicts rising/falling edge trigger 110, which receives as inputs control signals CS1 and CS2, a delayer 112, a level shifter 114, oscillator 130, clock buffer 135, charge pump 140 and switchable shorting element 150, along with resistors R1 and R2. Delayer 112 operates to ensure that enable signal EN is kept high for the desired 2 μsec, or other desired period of time to effect to fast charging mode as described herein. Level shifter 114 may be employed to adjust the applied voltage to a gate terminal of the transistor that may be employed for switchable shorting element 150.

As can be seen in FIG. 15 Vreg and Vout are supplied to pass transistor logic circuits 802, 804, 806 and 808. These logic circuits are responsible for supplying as outputs, either Vreg or Vout. Outputs are supplied as Vctrl1, Vctrl2, Vctrl3, and Vctrl4, which are supplied to gates of transistors in RF switch 900 of FIG. 16 having an RF common (RFC) terminal, and two input/output terminals RF1, RF2.

Which voltage, Vreg or Vout is applied to respective Vctrl1, Vctrl2, Vctrl3, and Vctrl4 outputs is dictated by logic circuit 850 using as inputs CS1 and CS2, the same inputs that are monitored for rising and falling edges to trigger enable signal EN generation. The logic circuit 850 uses the inputs CS1 and CS2 to output control signals Va1, Va2, Va3, and Va4 for the pass transistor logic circuits 802, 804, 806 and 808 to control the control voltages Vctrl1, Vctrl2, Vctrl3, and Vctrl4. In other words, as the states of CS1 and CS2 change, that change will be detected by rising/falling edge trigger 110 causing enable signal EN to be applied for, e.g., the 2 μsec period. At the same time, logic circuit 850 will determine which voltage, Vreg or Vout, should be applied to Vctrl1, Vctrl2, Vctrl3, and Vctrl4, and thus to gates of respective transistors, as this will determine which paths of RF switch 900 will be enabled. That is, Vctrl1 dictates whether the path between RF1 and RFC is enabled, Vctrl2 dictates whether the path between RF2 and RFC is enabled, Vctrl3 dictates whether a shunt path associated with RF1 is enabled, and Vctrl4 dictates whether a shunt path associated with RF2 is enabled.

In some embodiments of the present invention, the logic circuit 850 outputs the control signals Va1 with a first voltage level to the pass transistor logic circuit 802 so that the pass transistor logic circuit 802 outputs voltage Vreg as the control voltage Vctrl1. In some other embodiments of the present invention, the logic circuit 850 outputs the control signals Va1 with a second voltage level to the pass transistor logic circuit 802 so that the pass transistor logic circuit 802 outputs voltage Vout as the control voltage Vctrl1. The first voltage level is different from the second voltage level.

By applying the enhanced Vout (i.e., lower negative or higher positive voltage compared to Vreg) for a selected amount of time via Vctrl1, Vctrl2, Vctrl3, and Vctrl4, it is possible to more quickly cause RF switch 900 to enable or disable paths.

Those skilled in the art will appreciate that while the embodiments of the voltage generator 100, 101 have been described in connection with an RF switch, voltage generator 100, 101 can also be used in connection with a power amplifier, a low noise amplifier, a transceiver, a PLL or a frequency synthesizer, among other possible circuits, devices or components.

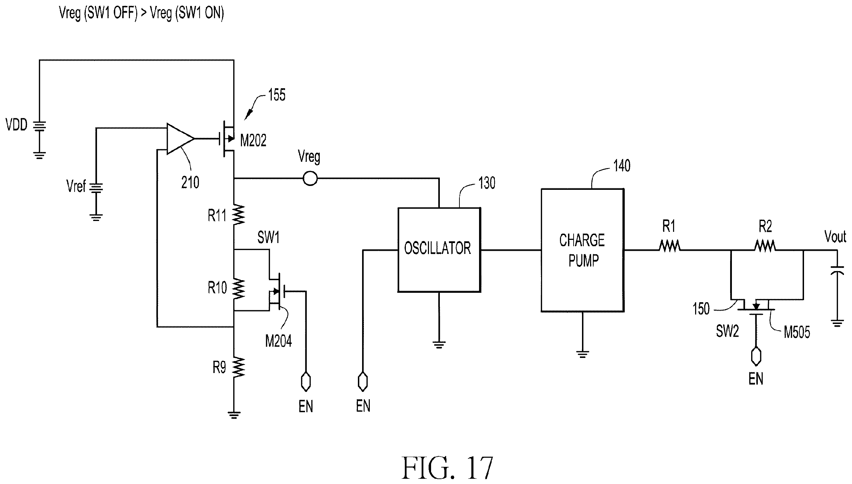

FIG. 17 depicts components of voltage generator 100, 101, with an emphasis on the application of enable signal EN on regulated voltage generator 155 and switchable shorting element 150. As indicated in the figure, with SW1 (M204) off, i.e., with the application of enable signal EN, Vreg is higher, than when SW1 (M204) is on. SW2 (M505) also has an impact on the operation of voltage generator 100, 101.

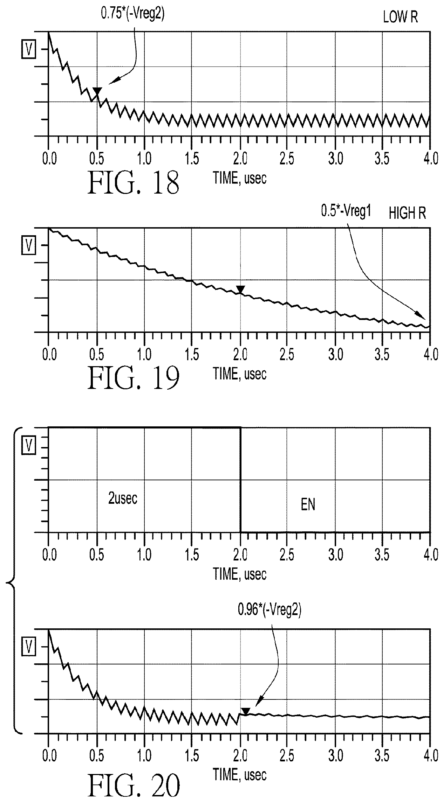

These impacts are depicted in the graphs of FIGs. 18-23C.

Specifically, FIG. 18 is a plot of Vout when SW1 and SW2 are both always on.

FIG. 19 is a plot of Vout when SW1 is always on, and SW2 is always off.
FIG. 20 shows a plot when SW1 is always on, and SW2 is on only for 2μsec, i.e., the time period of enable signal EN.

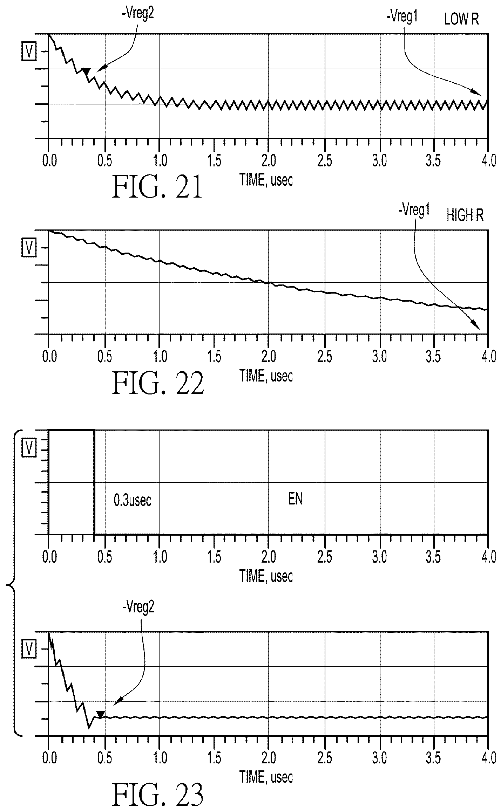

FIG. 21 is a plot of when SW1 is always off and SW2 is always on.
FIG. 22 is a plot of when SW1 is always off, and SW2 is always off.
FIG 23 is a plot of SW1 being off only for approximately 0.3 μsec and SW2 is on only for approximately 0.3 μsec.

**Claims**

1. The voltage generator (100, 101) of claim 8, further comprising
   a resistor (R2) having a first end and a second end, wherein the first end is coupled to the output of the charge pump (140) and the second end is coupled to the smoothing capacitor (C1); and
   a shorting element (150) coupled in parallel with the resistor (R2), and the shorting element (150) is configured to cause the resistor (R2) to be at least partially bypassed when turned on;
   wherein:
   the shorting element (150) is turned on during the switching period of the RF switch (900) and/or the shorting element (150) is turned on upon powering up the RF switch (900);
   the enable signal (EN) causes the shorting element (150) to be turned on.

2. The voltage generator (100, 101) of claim 1, further comprising an additional resistor (R1) coupled in series with the resistor (R2), wherein the additional resistor (R1) is coupled between the charge pump (140) and the first end of the resistor (R2) or coupled between the second end of the resistor (R2) and the smoothing capacitor (C1).

3. The voltage generator (100, 101) of claim further comprising an additional resistor (R1) coupled in series with the shorting element (150), wherein the additional resistor (R1) is coupled between the first end of the resistor (R2) and the shorting element (150) or coupled between the shorting element (150) and the second end of the resistor (R2).

4. The voltage generator (100, 101) of any of claims 1-3, wherein the smoothing capacitor (C1) is coupled between the second end of the resistor (R2) and ground.

5. The voltage generator (100, 101) of claim 1, wherein the voltage generator (100, 101) generates a negative voltage that is supplied to at least one switching element of the RF switch (900).

6. The voltage generator (100, 101) of claim 1, wherein the voltage generator (100, 101) comprises a rising/falling edge trigger (110) configured to generate the enable signal (EN) according to a rising edge or a falling edge of the control signals (CS1 to CSn).

7. The voltage generator (100, 101) of claim 1, wherein:
   a size of the first inverter (INV12) is smaller than a size of the second inverter (INV11).

8. A voltage generator (100, 101), comprising:

   an oscillator (130) having an output;
   a charge pump (140) having an input and an output, the input of the charge pump (140) being coupled to the output of the oscillator (130); and
   a smoothing capacitor (C1) coupled to the output of the charge pump (140),
   wherein:

      the voltage generator (100, 101) is connectable to a radio frequency, RF, switch (900) for supplying voltage via the smoothing capacitor (C1) to the RF switch (900);
      **characterized in that**:
      an enable signal (EN) is generated based on control signals (CS1 to CSn) that determine which signal path in the RF switch (900) is enabled;
      during a transition period of the RF switch (900), the enable signal (EN) is employed to cause the oscillator (130) to operate at a first frequency;
      during a non-transition period of the RF switch (900), the oscillator (130) operates at a second frequency lower than the first frequency; and
      the oscillator (130) is ring oscillator and comprises a first transistor (M222) and a second transistor (M220), the first transistor (M222) is ON for enabling a first inverter (INV12) of the oscillator (130) to operate at the first frequency in a first state enabled by the enable signal (EN), and the second transistor (M220) is ON for enabling a second inverter (INV11) of the oscillator (130) to operate at the second frequency in a second state enabled by an inversion of the enable signal, where the first inverter (INV12) and second inverter (INV11) are connected in parallel and in the loop of the ring oscillator.

9. The voltage generator (100, 101) of claim 8, wherein: a size of the first inverter (INV12) is smaller than a size of the second inverter (INV11).

**Patentansprüche**

1. Spannungsquelle (100, 101) nach Anspruch 8, welche weiter umfasst:

> einen Widerstand (R2) mit einem ersten Ende und einem zweiten Ende, worin das erste Ende mit dem Ausgang der Ladungspumpe (140) und das zweite Ende mit dem Glättungskondensator (C1) gekoppelt ist; und
> ein Kürzungselement (150), das mit dem Widerstand (R2) parallel geschaltet ist, worin das Kürzungselement (150) ausgestaltet ist, zu bewirken, dass der Widerstand (R2) mindestens teilweise überbrückt wird, wenn dieses angeschaltet wird;
> wobei:
>
>> das Kürzungselement (150) während der Schaltperiode der RF-Schalters (900) angeschaltet wird und/oder das Kürzungselement (150) nach Anschalten des RF-Schalters (900) angeschaltet wird;
>> und das Freigabesignal (EN) bewirkt, dass das Kürzungselement (150) angeschaltet wird.

2. Spannungsquelle (100, 101) nach Anspruch 1, welche weiter einen zusätzlichen Widerstand (R1) umfasst, der mit dem Widerstand (R2) seriell geschaltet ist, worin der zusätzliche Widerstand (R1) zwischen der Ladungspumpe (140) und dem ersten Ende des Widerstandes (R2) gekoppelt ist oder zwischen dem zweiten Ende des Widerstandes (R2) und dem Glättungskondensator (C1) gekoppelt ist.

3. Spannungsquelle (100, 101) nach Anspruch 1, welche weiter einen zusätzlichen Widerstand (R1) umfasst, der mit dem Kürzungselement (150) seriell geschaltet ist, worin der zusätzliche Widerstand (R1) zwischen dem ersten Ende des Widerstandes (R2) und dem Kürzungselement (150) gekoppelt ist oder zwischen dem Kürzungselement (150) und dem zweiten Ende des Widerstandes (R2) gekoppelt ist.

4. Spannungsquelle (100, 101) nach einem der Ansprüche 1-3, worin der Glättungskondensator (C1) zwischen dem zweiten Ende des Widerstandes (R2) und der Masse gekoppelt ist.

5. Spannungsquelle (100, 101) nach Anspruch 1, wobei die Spannungsquelle (100, 101) eine negative Spannung erzeugt, die an mindestens ein Schaltelement des RF-Schalters (900) ausgegeben wird.

6. Spannungsquelle (100, 101) nach Anspruch 1, worin die Spannungsquelle (100, 101) einen Anstiegsflanken-/Abfallflanken-Trigger (110) umfasst, der ausgestaltet ist, das Freigabesignal (EN) entsprechend einer Anstiegsflanke oder einer Abfallflanke des Steuersignals (CS1 bis CSn) zu erzeugen.

7. Spannungsquelle (100, 101) nach Anspruch 1, worin:
eine Größe des ersten Inverters (INV12) kleiner ist als eine Größe des zweiten Inverters (INV11).

8. Spannungsquelle (100, 101), welche umfasst:

> einen Oszillator (130) mit einem Ausgang;
> eine Ladungspumpe (140) mit einem Eingang und einem Ausgang, worin der Eingang der Ladungspumpe (140) mit dem Ausgang des Oszillators (130) gekoppelt ist; und
> einen Glättungskondensator (C1), der mit dem Ausgang der Ladungspumpe (140) gekoppelt ist,
> worin:
>
>> die Spannungsquelle (100, 101) mit einem Radiofrequenz-, RF, schalter (900) verbindbar ist, um über den Glättungskondensator (C1) eine Spannung an den RF-Schalter (900) auszugeben;
>> **dadurch gekennzeichnet, dass**:
>>
>>> ein Freigabesignal (EN) basierend auf Steuersignalen (CS1 bis CSn) erzeugt wird, die bestimmen, welcher Signalpfad in dem RF-Schalter (900) angeschaltet wird;
>>> während einer Übergangsperiode des RF-Schalters (900), das Freigabesignal (EN) verwendet wird, um zu bewirken, dass der Oszillator (130) mit einer ersten Frequenz betrieben wird;
>>> während einer Nicht-Übergangsperiode des RF-Schalters (900), der Oszillator (130) mit einer zweiten Frequenz betrieben wird, die niedriger ist als die erste Frequenz; und

der Oszillator (130) ein Ring-Oszillator ist und einen ersten Transistor (M222) und einen zweiten Transistor (M220) umfasst, wobei der erste Transistor (M222) auf ON steht, damit ein erster Inverter (INV12) des Oszillators (130) mit der ersten Frequenz in einem ersten durch das Freigabesignal (EN) freigegebenen Zustand betrieben werden kann, und der zweite Transistor (M220) auf ON steht, damit ein zweiter Inverter (INV11) des Oszillators (130) mit der zweiten Frequenz in einem zweiten durch eine Inversion des Freigabesignals freigegebenen Zustand betrieben werden kann, worin der erste Inverter (INV12) und der zweite Inverter (INV11) parallel und in der Schleife des Ring-Oszillators verbunden sind.

9. Spannungsquelle (100, 101) nach Anspruch 8, worin:
eine Größe des ersten Inverters (INV12) kleiner ist als eine Größe des zweiten Inverters (INV11).

## Revendications

1. Générateur de tension (100, 101) selon la revendication 8 comprenant en outre une résistance (R2) présentant une première extrémité et une deuxième extrémité, la première extrémité étant couplée à la sortie de la pompe de charge (140) et la deuxième extrémité étant couplée au condensateur de lissage (C1) ; et
un élément de court-circuit (150) couplé en parallèle à la résistance (R2) et l'élément de court-circuit (150) étant conçu pour provoquer le contournement au moins partiel de la résistance (R2) lorsqu'il est allumé ;
l'élément de court-circuit (150) étant allumé pendant la période de commutation du commutateur RF (900) et/ou l'élément de court-circuit (150) étant allumé lors de l'alimentation du commutateur RF (900) ;
le signal d'activation (EN) provoquant l'allumage de l'élément de court-circuit (150).

2. Générateur de tension (100, 101) selon la revendication 1, comprenant en outre une résistance supplémentaire (R1) couplée en série à la résistance (R2), la résistance supplémentaire (R1) étant couplée entre la pompe de charge (140) et la première extrémité de la résistance (R2) ou couplée entre la deuxième extrémité de la résistance (R2) et le condensateur de lissage (C1).

3. Générateur de tension (100, 101) selon la revendication 1, comprenant en outre une résistance supplémentaire (R1) couplée en série à l'élément de court-circuit (150), la résistance supplémentaire (R1) étant couplée entre la première extrémité de la résistance (R2) et l'élément de court-circuit (150) ou couplée entre l'élément de court-circuit (150) et la deuxième extrémité de la résistance (R2).

4. Générateur de tension (100, 101) selon l'une quelconque des revendications 1 à 3, le condensateur de lissage (C1) étant couplé entre la deuxième extrémité de la résistance (R2) et la masse.

5. Générateur de tension (100, 101) selon la revendication 1, le générateur de tension (100, 101) générant une tension négative qui est fournie à au moins un élément de commutation du commutateur RF (900).

6. Générateur de tension (100, 101) selon la revendication 1, le générateur de tension (100, 101) comprenant un déclencheur par front d'impulsion montant/descendant (110) conçu pour générer le signal d'activation (EN) en fonction d'un front d'impulsion montant ou d'un front d'impulsion descendant des signaux de commande (CS1 à CSn).

7. Générateur de tension (100, 101) selon la revendication 1 :
une dimension du premier onduleur (INV12) étant inférieure à une dimension du deuxième onduleur (INV11).

8. Générateur de tension (100, 101) comprenant :

un oscillateur (130) présentant une sortie ;
une pompe de charge (140) présentant une entrée et une sortie, l'entrée de la pompe de charge (140) étant couplée à la sortie de l'oscillateur (130) ; et
un condensateur de lissage (C1) couplé à la sortie de la pompe de charge (140),
le générateur de tension (100, 101) pouvant être connecté à un commutateur de radiofréquence RF (900) pour fournir une tension par l'intermédiaire du condensateur de lissage (C1) au commutateur RF (900) ;
**caractérisé en ce que** :

un signal d'activation (EN) est généré sur la base de signaux de commande (CS1 à CSn) qui déterminent quel trajet de signal dans le commutateur RF (900) est activé ; pendant une période de transition du commutateur RF (900), le signal d'activation (EN) est employé pour provoquer le fonctionnement de l'oscillateur (130) à une première fréquence ;

pendant une période de non-transition du commutateur RF (900), l'oscillateur (130) fonctionne à une deuxième fréquence inférieure à la première fréquence ; et

l'oscillateur (130) est un oscillateur en anneau et comprend un premier transistor (M222) et un deuxième transistor (M220), le premier transistor (M222) est activé pour permettre le fonctionnement d'un premier onduleur (INV12) de l'oscillateur (130) à la première fréquence dans un premier état activé par le signal d'activation (EN) et le deuxième transistor (M220) est activé pour permettre le fonctionnement d'un deuxième onduleur (INV11) de l'oscillateur (130) à la deuxième fréquence dans un deuxième état activé par une inversion du signal d'activation, le premier onduleur (INV12) et le deuxième onduleur (INV11) étant connectés en parallèle et dans la boucle de l'oscillateur en anneau.

**9.** Générateur de tension (100, 101) selon la revendication 8 :

une dimension du premier onduleur (INV12) étant inférieure à une dimension du deuxième onduleur (INV11).

FIG. 1

Vout IS POSITIVE VOLTAGE (VPOS) OR NEGATIVE VOLTAGE (VNEG)

INVERTER 170

EP 3 032 730 B1

FIG. 2

CS1 → RISING/FALLING EDGE TRIGGER 110 → EN

CS2 →

130 RING OSCILLATOR

140 CHARGE PUMP

150

R1

R2 145

150

Vout

C1

101

155 Vreg

Vref

Iref 160

172(a) 172(b)

171(a) 171(b)

INVERTER RE-SIZING 170

FIG. 3

FIG. 4

FIG. 5

FIG. 6

FIG. 7

FIG. 8

Vout (EN ALWAYS HIGH)

FIG. 9

TIME, usec

Vout (EN ALWAYS LOW)

FIG. 10

TIME, usec

FIG. 11

TIME, usec

Vout (EN IS HIGH ONLY DURING 0~2usec)

FIG. 12

TIME, usec

FIG. 13

START UP
PRE-CHARGING STATE    NORMAL OPERATION STATE

fp                    fn

DESCRIPTIONS OF
EMBODIMENT 1

fp>fn

(V)

ts          td

fp: PRE-CHARGING FREQUENCY
fn: NORMAL OPERATION FREQUENCY
CASE 1: START UP PRE-CHARGING CASE
CASE 2: MODE TO MODE PRE-CHARGING CASE
VPOS CASE: VOLTAGE LEVEL V1<V2<V3
VNEG CASE: VOLTAGE LEVEL V1>V2>V3

CASE 1

V1
FAST CHARGING

Vout

V2
V3          SLOW CHARGING

FIG. 14

MODE TO MODE
PRE-CHARGING STATE    NORMAL OPERATION STATE

fn    fp                fn

fp>fn

CASE 2

(V)

ts          td

EP 3 032 730 B1

FIG. 15

FIG. 16

FIG. 17

0.75*(-Vreg2)                                    LOW R

**FIG. 18**     TIME, usec

0.5*-Vreg1    HIGH R

**FIG. 19**     TIME, usec

2usec          EN

TIME, usec

0.96*(-Vreg2)

**FIG. 20**     TIME, usec

-Vreg2  -Vreg1  LOW R

FIG. 21  TIME, usec

-Vreg1  HIGH R

FIG. 22  TIME, usec

0.3usec  EN

TIME, usec

-Vreg2

FIG. 23  TIME, usec

**EP 3 032 730 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140210436 A1
- US 2014354340 A1
- US 2012049938 A1